# EUROPEAN PATENT APPLICATION

(11) **EP 3 570 090 A1**
(43) Date of publication of application: **20.11.2019**
(21) Application number: 18020209.5
(22) Date of filing: 15.05.2018
(51) Int. Cl.: G02B 27/64

(54) **OPTICAL FIELD DEROTATOR MOUNTED ON THE NASMYTH FLANGE**

(71) Applicant: FMW Isik Universitesi Opam Iktisadi Isletmesi, Istanbul (TR); Keskin, Onur, Istanbul (TR)
(72) Inventor: The designation of the inventor has not yet been filed

(57) **Abstract**

The invention discloses an optical field derotator mounted on the Nasmyth flange.

## Description

### BACKGROUND OF THE INVENTION

The invention discloses an optical field derotator mounted on the Nasmyth flange.

### DETAILED DESCRIPTION OF THE INVENTION

EP 1 852 727 B1 explains telescope mounts in detail.

Various types of supports or mounts for telescopes are available. According to a first general classification, mounts can be divided into equatorial mounts and alt-azimuth mounts.

The equatorial mount is characterized in that one of the two axes (said polar or right ascension axis) is capable of being inclined such as to be arranged parallel to the Earth's axis and thus perpendicular to the equator. Particularly, the right ascension axis (RA axis) is inclined by as many degrees as the ones of the latitude of the observation place and such as to be parallel to the pole (the North Pole for Northern hemisphere, and the South Pole for Southern hemisphere). This configuration allows one to track the apparent motion of a celestial body by moving the telescope about only one axis, i.e. by means of a simple motion that can be easily provided by means of an inexpensive drive. For this reason, the equatorial mount has become the most widely used in amateur telescopes.

In the second type of mount, i.e. the alt-azimuth mount, the two axes about which the telescope can move are the one orthogonal and the other parallel to the ground, such that the optics can move in all the directions along Cartesian axes. However, this arrangement of the axes of movement does not correspond to the arrangement of the Earth's axis and equatorial plane, which, as is known, at other latitudes than the poles are inclined relative thereto. Consequently, due to the Earth's true motion (spin about the North-South polar axis in the West-East direction), the optics, in order to track a celestial body in apparent motion, requires to be moved instant by instant along both axes in both directions. This movement is very complicated, and together with the rotation of the field of view during the movement, a prerequisite condition is also the constant movement of both motors relative to the two axes of movement (azimuth and altitude) in addition to a sophisticated automation (the so-called field derotator), which is normally inaccessible to beginners and amateur astronomers in general because of the high cost.

The advantage of the alt-azimuth mount, however, is its weight balance, which makes it applicable also to large-sized telescopes.

The present invention discloses an opto-mechanical interface to improve the optical performance on an alt-azimuth mount, i.e. an optical field derotator.

Field derotator is an addition to the telescope mount that was developed in response to field rotation.

The European Southern Observatory describes derotator as below:
"The derotator compensates for the field rotation happening at the VLT Nasmyth focus. It is a classical derotator based on two prisms: when rotated by an angle α, the image plane rotates by the angle 2α."

EP 2 539 758 B1 describes the concept of field rotation.

The base or the earth surface, which in general is experienced as substantially horizontal, due to the curvature of the earth surface is tilted with respect to the surface spanned by the equator, unless one is at the North or South Pole. The positioning of a telescope assembly on the curved earth surface at a distance from the North or South Pole, therefore results in the vertical axis of rotation being at a deviating angle to the parallactic axis of rotation, which is parallel to the polar line or polar axis of planet earth, perpendicular to the surface spanned by the equator of the earth. Due to said deviating angle and the fact that planet earth rotates about the polar axis, observing and in particular tracking celestial bodies from another location than the North or South Pole is subjected to a complex combination of the rotations. The field of view observed through the ocular lens rotates with respect to the celestial bodies observed, as a result of the rotation of planet earth as discussed above. This is also called field rotation. Field rotation, particularly in case of photography with a slow shutter speed, is undesirable, as it may lead to a blurred photo. Rotating the telescope about the vertical axis of rotation Z and the horizontal axis of rotation, counter to the rotation of planet earth, does not suffice to compensate the rotation of the earth, and as a consequence the field rotation.

The speed of the field rotation is the derivative of the parallactic angle with respect to time.

Getting high signal-to-noise observations requires long integration times (minutes to hours), so it is mandatory to compensate the rotation of the optical field due to the earth's rotation. The device which is used to compensate the optical field rotation is called a field derotator.

As described by Herbert Runciman in "Reflexion, refraction, difraction" (1990), there are many ways to compensate the field rotation, divided in three main categories.

First, it is possible to numerically rotate the integrated light on the detector. The main problem with this solution is that there is a signifcant loss of precision during the interpolation of the image - and numerical derotation is not possible in spectrography. Therefore the derotation must be optical and not numerical, because the compensation must be done before the scientific instruments.

Another solution is to compensate the rotation with a prism mount like Dove prism, Schmidt prism, Rantsch prism or Pechan prism. The concept is to built a structure which make an elbow to the optical path and turn it to counter the rotation. With this technique it is required to counter rotate the mount at half the speed of field rotation, because of the refections. However the weakness of this solution is that, except if the beam is collimated, the astigmatism is severe.

The third possibility is to build an optical mount like the second solution but with a mirror instead of prisms. The advantage is that there is no astigmatism. On the other hand, rigidity and positioning precision have been main challenges.

In one embodiment, the present invention discloses a K-mirror derotator design, wherein the field derotator is mounted on the Nasmyth flange (12).

Whether K-mirror design or not, mounting a field derotator on the Nasmyth flange (12) generates challenges in telescope design. Rigidity and positioning precision have already been mentioned. Rigidity, as a general term, includes stress and deformations.

In addition to rigidity and positioning precision, additional challenges are:
i) geometry and available space, and
ii) thermal stability.

As a result of these four challenges, mounting a field derotator on the Nasmyth flange(12) does not exist in prior art.

In their article titled "CANARY: the on-sky NGS/LGS MOAO demonstrator for EAGLE" (Proc. of SPIE Vol. 7015, 70150E, (2008)), the authors, in general, describe the challenges of telescope design.

### 1 Rigidity

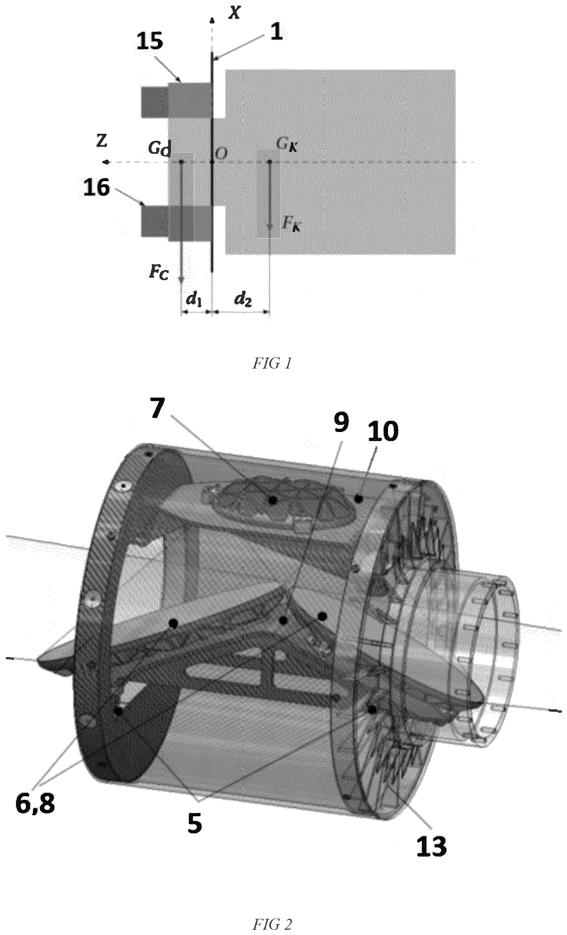

The mounted load on the rotating stage(15) and on the flange must not exceed a certain cantilever load (which is in function of the load's weight and the off axis distance). In order to minimize the cantilever's effects. We choose to add a counterweight. The idea is to place the center of mass perfectly aligned with the screws that fix the derotator on the setting flange(1). This solution offers the advantage that the flange won't support any torque (FIG 1). It will definitely simplify the flange design. However, since the center of mass is not aligned with the motor, it was required to check if the motor off-axis load specification is not exceeded. In the mechanical design, the counterweight center of mass has been dimensioned to fit with the previous statement.

The housing (22) consists on a carbon fiber (CF) cylinder in which are mounted the K-mirror mount(9) and an output lid to assemble it on the setting flange. The output lid (13) is a critical part because its volume must be minimal (to minimize the cantilever) and its stiffness must be maximal (to avoid misalignment). This part is made of a CF lid screwed on an invar shaft in order to fasten it in the motor bearing (FIG 2).

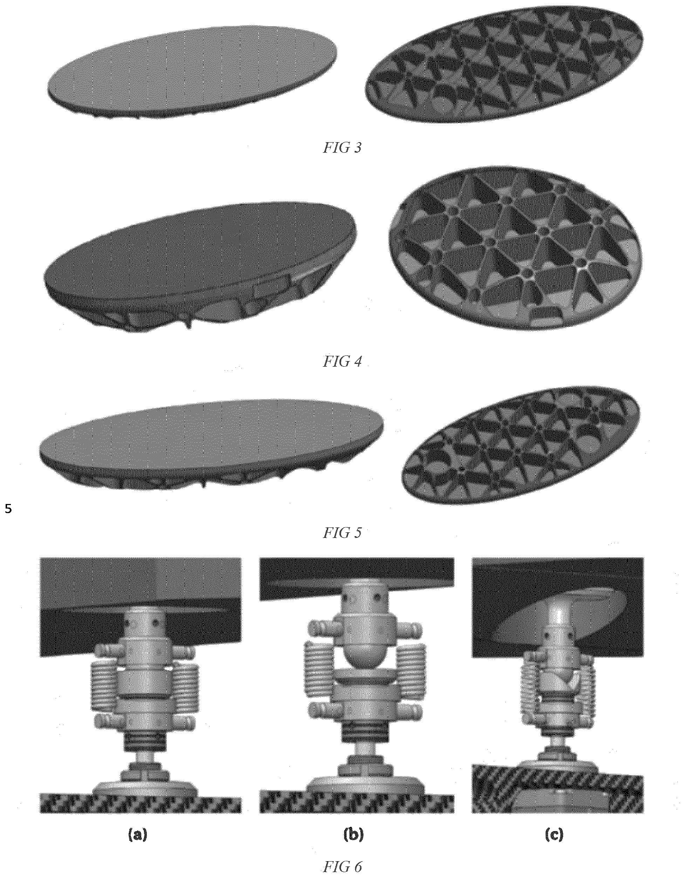

There is an earlier publication in the literature "Design of a derotator for the 4m DAG telescope - Proceedings Volume 9908, Ground-based and Airborne Instrumentation for Astronomy VI; 99085L (2016); doi: 10.1117/12.2234392" which is about derotator design for placing it in the fork. The only point which is introduced in the article is placing it in the fork hole and using K-mirror setup. In the article, the design of the shell (22), mirror mounts (9 and 10) and semi kinematic joints (19) are different. There are many other components which are not exist in the article such as setting flange (1) and its components, counter weight (16 and 17), actuators for mirror positioning (5) and their components. Lastly, the mirror designs (FIG 3, FIG 4, FIG 5) are also totally different.

### 2 Positioning precision

Light weighted mirrors (6, 7 and 8) are mounted on actuators (5) in order to set alignment. Semi-kinematic mounts (19) are placed between mirrors pads and actuators in order to prevent internal constrains (FI 6). Due to the fact that the derotator rotates, each of the semi-kinematic mount (19) is axially pre constrained. Actuators (5) are mounted on carbon fiber structures which are mounted in the carbon fiber flange/cylinder (22).

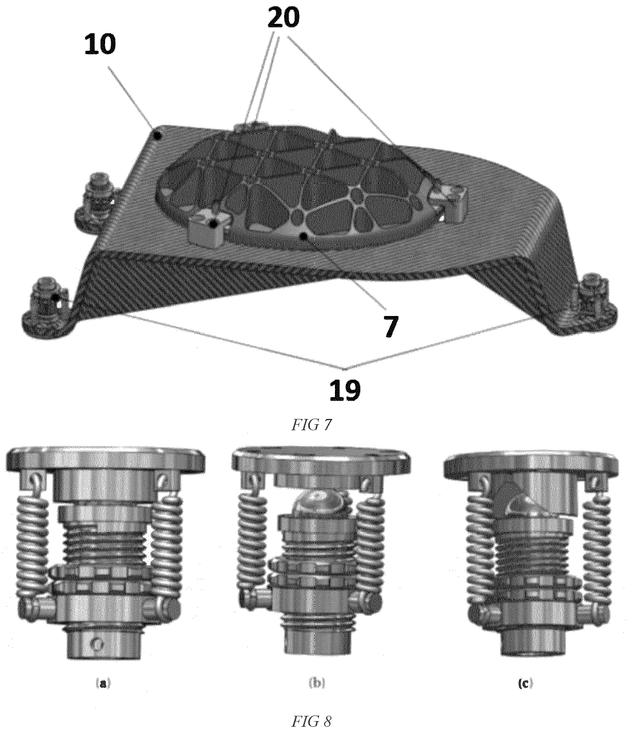

There are three actuators (5) per mirror. The upper mirror (7) is not directly attached to the actuators but on a CF structure. The mirror is clamped (20) (spring preloaded pins) on 3 semi kinematic contact points (FIG 7).

The mirrors holders are designed using a semi-kinematic mount to avoid hyperstatism and internal constrains due to the thermal expansion of mirrors or structure (FIG 6). This section presents the proposed solution. Techniques and calculus are taken from [K. M. Schwertzand J. H. Burge, Field Guide to Optomechanical Design and Analysis, (SPIE. Press, 2012, ISBN: 9780819491619)].

There are 3 different (FIG 6 and FIG 8).semi-kinematic sub-modules (19). In the first, the joint is a ball in an inverted cone, it has 3 degrees of freedom (DoF) consisting of 3 rotations. The second one is a ball in on a plane, it has 5 DoF (2 translations, 3 rotations). The third one is a ball in a V-shape part, is has 4 DoF (3 rotations, 1 translation). The idea to pre-constrain the system is to avoid displacements during the derotator rotation. The pre-constraint force magnitude must be higher than the mirror and its mount weight. Then the system stiffness must be estimated to see if the deformations and mirrors displacements are negligible sources of error or not. After estimation, the bigger number is used to process the 3D ray tracing analysis.

The derotator alignment is not dynamically controlled, therefore, it must be manually aligned when it will be installed on the Nasmyth flange (12). Concerning the positioning, in the case of a K-mirror derotator, four degrees of freedom must be taken into account. One DoF along X axis (dx), another along Y axis (d y) and two other around these axis (r x, r y).

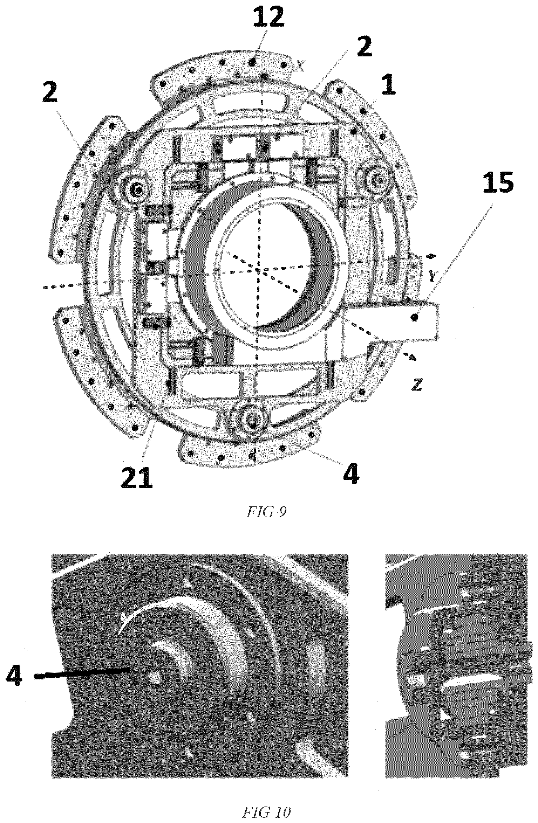

The developed module must have the possibility to set each DoF independently (FIG 9). In order to simplify the setting process and avoid hyperstatism the flange (1) will be fixed by three ball joints (4). Each of them (ball joint modules) will be adjustable along the Z axis in order to allow to set the derotator axis parallelism (r x and r y) with respect to the telescope optical axis. Derotator Eccentricity (dx and d y) will be set thanks to flexible blades which allow linear displacement (along X and Y axis).

In order to set dx and d y a shaft is mounted in 2 linear bearing. This shaft has a thread that allows to mount the differential screw (2). The screw can be adjusted with a standard Imbus key. X axis linear bearings are fixed on the top of the setting flange in order to keep the system stable. Y axis linear bearings are fixed on the left side of the plate. By turning the differential screw, the derotator position can be adjusted along the screw axis. The total flexible blades (21) travelling range is 4mm (-2 to +2mm). However, for the Y axis, the flexible blades (21) position is shifted by 1 mm on the left in order to have a pre-constraint on the differential screw (2) when the derotator is aligned. Then the operating range will be from 0 to +2mm. The advantage of this solution is to avoid backlash.

Since the setting flange (1) requires actuators in order to set derotator alignment, the option to use differential screws (2) is investigated. The idea is to obtain a setting resolution that is enough high to set the derotator axis on the telescope axis. For relevant calculations, arbitrarily, it is safe to state that 1 arcsec resolution is enough to set the parallelism.

A support shaft is screwed in the nasmyth flange (12). Then a linear bearing is mounted on it in order to guide the setting flange. An adaptor socket and a ball bearing is mounted on the linear bearing. Then a carter is used to attach the ball bearing on the setting flange. The setting is driven by the differential screw (in the center). The center part of the differential screw in flexible in order to allow the alignment of the setting flange (1) (FIG 10).

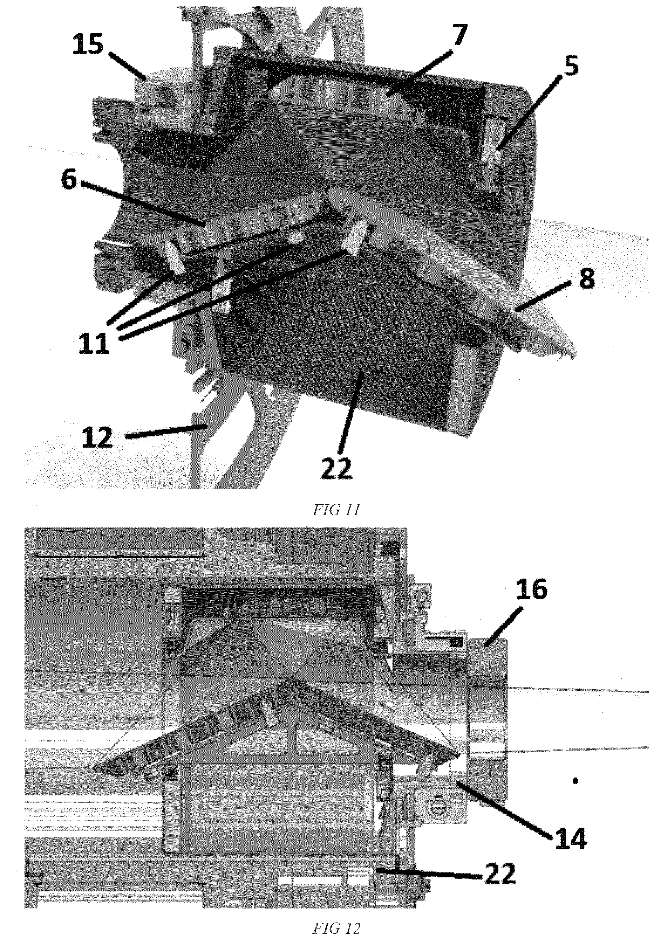

Regarding the different design solutions and improvements between the current version and the previous article ("Design of a derotator for the 4m DAG telescope - Proceedings Volume 9908, Ground-based and Airborne Instrumentation for Astronomy VI; 99085L (2016); doi: 10.1117/12.2234392"). In the article, there is no information about positioning and precision. It is assumed that mirrors and the rest of the system will be perfectly aligned with the light beam coming from the telescope. Where as, the current design offers solutions about real life cases which are explained above such as semi kinematic joints (19), setting flange (1), 3 actuators (5) per mirror for positioning (FIG 11).

### 3 Geometry and available space

It has been stated that the allocated space in the Nasmyth flange (12) is sufficent (FIG 12). The diameter of the allocated space by the fork center is ø 580mm and is approx 800mm deep. The derotator field of view will be maximized in function of the available space and mechanical considerations. Optically (only according to geometrical considerations), the maximal field of view is about 8.3 arcmin. However due to mechanical constrains (cantilever of the system and internal flexures), the maximal field of view İS reduced to 7 arcmin.

### 4 Thermal stability

The derotator is designed to survive from -20C to +35C. It consists of various parts made of different materials. In order to provide the best opto-mechanical performance and thermal stability, coefficient of thermal expansion (CTE) levels of all contacting parts are investigated and chosen accordingly. Each sub-assembly is numeraically evaluated and tested for effects of thermal changes.

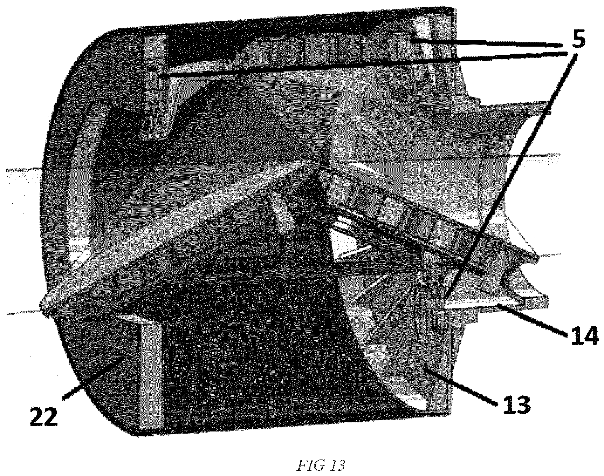

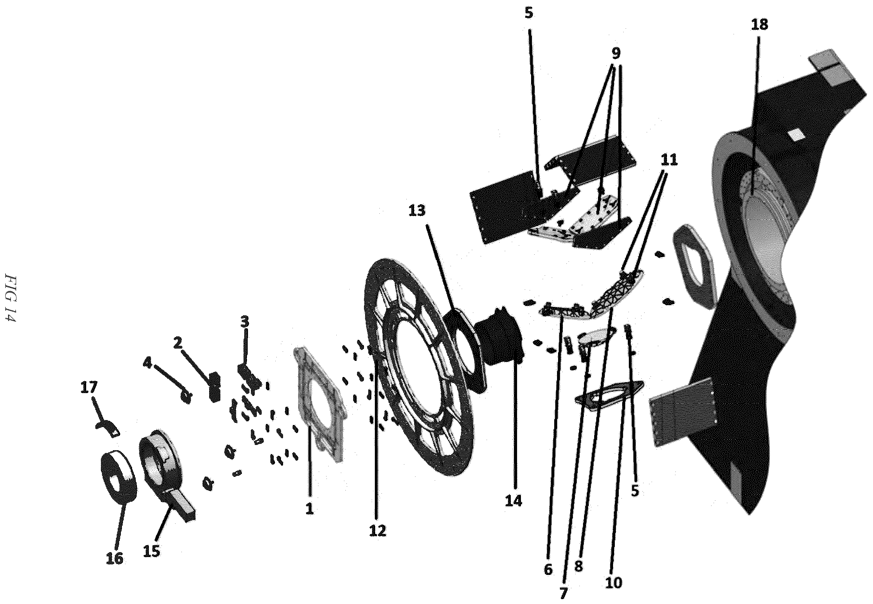

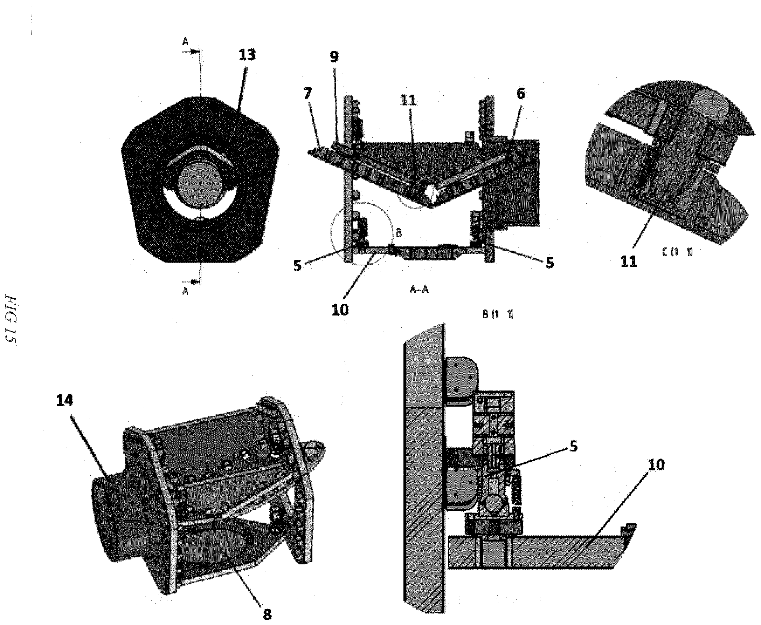

The derotator comprises four parts:
i) the shell (22) that will envelop the mirror (FIG 13).
ii) a module that will include the two inclined lower mirrors (6 and 8) (FIG 2).
iii) a module that will include the upper mirror (7) (FIG 7), and
iv) a module that will drive the derotator (FIG 9).

In this embodiment, the derotator is mounted on a single bearing, which allows to avoid hyperstatism.

## Claims

1. An optical field derotator mounted on the Nasmyth flange.

2. An optical field derotator according to Claim 1, wherein the optical field derotator is K-mirror design.

3. An optical field derotator according to Claim 1, wherein the optical field derotator is mounted on a single bearing.

4. An optical field derotator according to Claim 2, wherein the optical field derotator is mounted on a single bearing.
